# EUROPÄISCHE PATENTANMELDUNG

(11) **EP 0 527 374 A2**
(43) Veröffentlichungstag der Anmeldung: **17.02.1993**
(21) Anmeldenummer: 92112745.2
(22) Anmeldetag: 25.07.1992
(51) Int. Cl.: H04B 1/66

(54) **Codierverfahren für Audiosignale mit 32 kbit/s**

(30) Priorität: 12.08.1991 DE 4126581; 13.04.1992 DE 4212339
(71) Anmelder: Alcatel SEL Aktiengesellschaft, D-70435 Stuttgart (DE); ALCATEL N.V., NL-1077 XX Amsterdam (NL)
(72) Erfinder: Fesseler, Peter, W-7000 Stuttgart 30 (DE); Thierer, Gebhard, Dr., W-7257 Ditzingen (DE)
(74) Vertreter: Knecht, Ulrich Karl

(57) **Zusammenfassung**

Für Audiosignale (50 bis 7000 Hz) soll bei einer Datenrate von 32 kbit/s eine gut Sprachqualität (auch für Musiksignale) erzielt werden, wozu eine wesentlich stärkere Datenreduktion als bisher bekannt erreicht werden muß.

Zur weiteren Datenreduktion der Betragswerte, der nach einer FFT-Wandlung erhaltenen Koeffizienten, wird die absolute Hörschwelle und eine als Maskierungseffekt bekannte, relative Hörschwelle für die Festlegung der Quantisierungsstufen berücksichtigt und anschließend eine variable Quantisierung durchgeführt.

## Beschreibung

In der Telekommunikation findet heutzutage größtenteils eine digitale Signalübertragung statt.

Um den wachsenden Bedarf an z.B. Gesprächsverbindungen mit den vorhandenen Leitungskapazitäten bewältigen zu können, werden immer niedrigere Bitraten bei gleicher Verständigungsqualität notwendig.

Für eine gute Verständigungsqualität, z.B. beim Freisprechen oder bei Videokonferenzen ist eine derzeitige Bandbreite von 300 bis 3400 Hz bei 64 kbit/s Übertragungsdatenrate bereits unzureichend. Das Ziel besteht darin, für Bandbreiten von zukünftig 50 bis 7000 Hz bei einer gleichzeitigen Reduzierung der Datenrate auf 32 kbit/s eine gute Sprachqualität (auch für Musiksignale) zu erzielen.

Es ist bereits ein Codierverfahren für breitbandige (0 bis 20 KHz) Signale bekannt ("Transformationscodierung mit fester Bitzuteilung bei Audiosignalen", von R. Orglmeister, FREQUENZ 44 (1990) 9-10, Seiten 226 bis 232), bei dem eine Folge von Abtastwerten (44,1 KHz Abtastung mit 16 Bit pro Abtastwert) zunächst in Blöcke gleicher Größe aufgeteilt und mittels einer überlappenden Fensterung (Rechteck-Cosinus-Funktion) zur Unterdrückung hörbarer Blockgrenzeffekte bearbeitet wird.

Danach erfolgt eine Transformation des Signales mittels einer schnellen Fourier-Transformation in den Frequenzbereich und eine Zerlegung in Betrags- und Phasenwerte.

Die Phasenwerte werden gleichförmig quantisiert, während die Betragswerte einer Datenreduktion unterworfen werden.

Zur Datenreduktion erfolgt zunächst eine Betragsgruppenbildung in der Art, daß anstelle der einzelnen Betragswerte nur noch der geometrische Mittelwert aller Beträge einer Gruppe übertragen werden.

Diese Betragsgruppen werden dann, je nach Frequenzbereich, zu fünf unterschiedlichen Quantisierern geleitet, die ungleichförmig, dem logarithmischen Lautstärkeempfinden genähert, quantisieren.

Mit diesem bekannten Verfahren wird zwar eine gute Sprachqualität erzielt, jedoch ist eine Datenrate von 32 kbit/s aufgrund zu geringer Datenreduktion der Betragswerte nicht erreichbar.

Der Erfindung liegt die Aufgabe zugrunde, Codierverfahren mit einer wesentlichen höherer Datenreduktion bei gleichbleibender Sprachqualität, insbesondere für Audiosignale mit einer Bandbreite bis 7000 Hz bei 32 kbit/s Datenrate, zu realisieren.

Diese Aufgabe wird erfindungsgemäß durch die technischen Lehren der Patentansprüche 1 oder 5 gelöst.

Dabei wird insbesondere eine wesentliche Datenreduktion der Betragswerte, der nach einer diskreten Fourier-Transformation erhaltenen und in Betrag und Phase zerlegten FFT-Koeffizienten, durch die Berücksichtigung der absoluten Hörschwelle und einer als Maskierungseffekt bekannten, relativen Hörschwelle für die Festlegung der Quantisierungsstufen sowie durch eine anschließende variable Quantisierung erzielt.

Eine andere erfindungsgemäße Lösung berücksichtigt nach der Zerlegung der komplexen Koeffizienten in Betrags- und Phasenwerte zunächst die den sogenannten Maskierungseffekt ausnutzende relative Hörschwelle und schließt dann die Einteilung zu Frequenzbändern und die Berücksichtigung der absoluten Hörschwelle an. Dabei werden für die unter den Schwellen liegenden Werte für den Betrag der Wert Null verwendet und die Bits für die zugehörigen Phasenwerte eingespart und für die von Null verschiedenen Betrags- und Phasenwerte verwendet.

Weitere vorteilhafte Ausgestaltungen des Gegenstandes der Erfindung sind den Unteransprüchen zu entnehmen.

Im folgenden werden zwei Ausführungsbeispiele anhand der in den Figuren gezeigten Ablaufpläne erläutert.

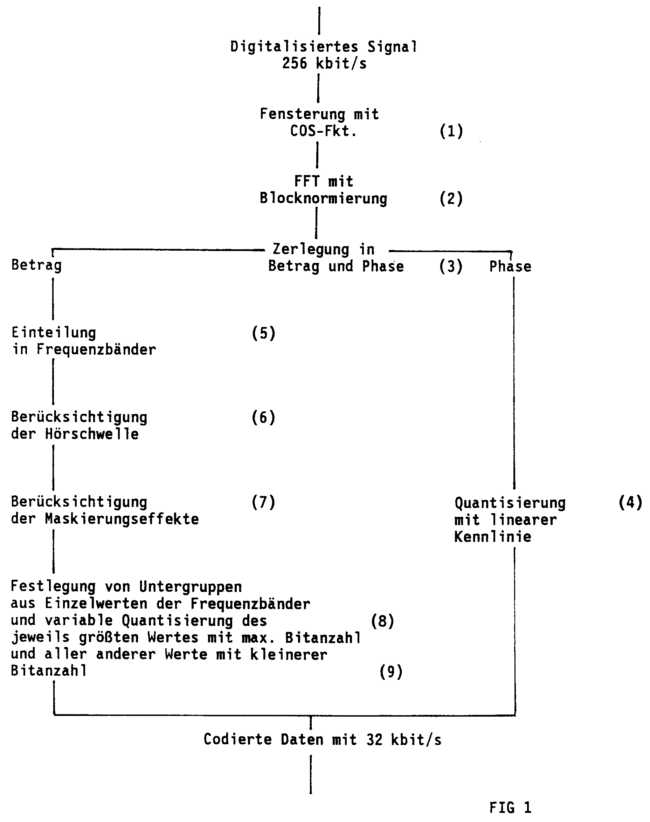

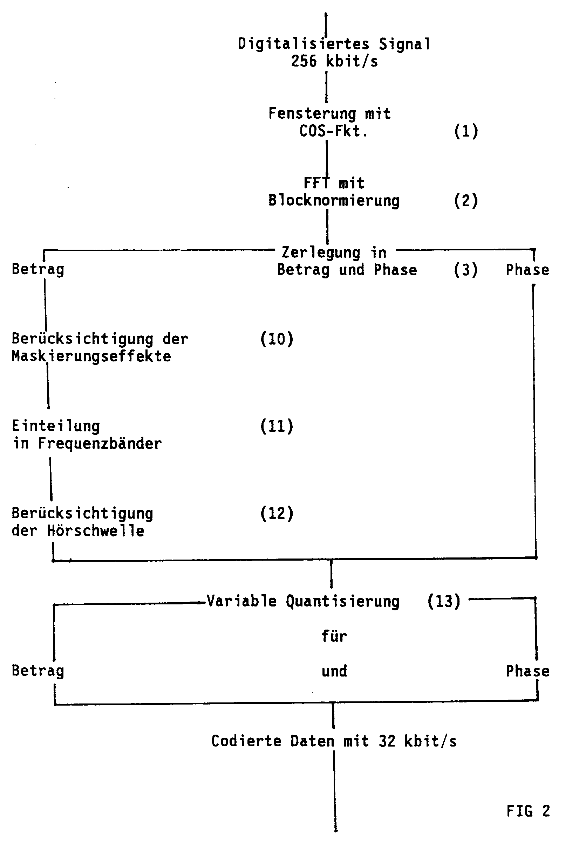

Es wird in beiden Fällen (Figur 1, 2) von einem mit 16 KHz abgetasteten und mit 16 Bit quantisierten, auf eine Bandbreite von 50 bis 7000 Hz bandbegrenzten Audiosignal ausgegangen.

Im Zeitbereich wird diese kontinuierliche Folge von Abtastwerten in Blöcke gleicher Länge (hier 256 Werte) aufgeteilt und eine überlappende Fensterung mit Hilfe einer Rechteck-Cosinus-Funktion durchgeführt (vgl. (1) in den Figuren). Diese an sich bekannte überlappende Fensterung unterdrückt hörbare Blockgrenzeffekte.

Daran anschließend erfolgt eine Transformierung des in Blöcke aufgeteilten Signals mit Hilfe einer diskreten Fourier-Transformation, wobei insbesondere eine schnelle Fourier-Transformation FFT (vgl. (2)) verwendet und eine übliche Blocknormierung durchgeführt wird.

Die so erhaltenen je 256 konjugiert komplexen Koeffizenten werden dann in Betragswerte und in Phasenwerte getrennt (vgl. (3)), um anschließend eine getrennte Quantisierung durchzuführen.

Im folgenden wird nun das erfindungsgemäße Verfahren nach Anspruch 1 weiter erläutert.

Da mit zunehmender Frequenz die Auflösungsfähigkeit des menschlichen Ohrs deutlich abnimmt, können höhere Frequenzen wesentlich gröber quantisiert werden als niedere Frequenzen.

Deswegen werden die Phasenwerte (vgl. (4)), hier 128 Werte, da von den 256 erhaltenen konjugiert komplexen Werten aus Symmetriegründen nur eine Hälfte relevant ist, angefangen mit vorzugsweise 5 Bit für die niedrigste Frequenz, gemäß einer linearen Quantisierungskennlinie abnehmend bis zu 2 Bit für die höchste Frequenz quantisiert.

Zur Datenreduktion werden erfindungsgemäß die Betragswerte erheblich komprimiert.

Dazu werden die Betragswerte in Frequenzbänder eingeteilt (vgl. (5)), die orientiert an kritischen Frequenzgruppen zu höheren Frequenzen hin breiter werden. Die Grundlage der kritischen Frequenzgruppen ist z.B. aus "Subdivision of the Audible Frequency Range into Critical Bands (Frequenzgruppen)", by E. Zwicker, The Journal of the Acoustical Society of America, Vol. 33, No. 2, Feb. 1991, Seite 248 bekannt.

Bei einer solchen Betragsgruppenbildung werden anstelle der einzelnen Betragswerte der Spektrallinien nur noch der geometrische Mittelwert aller Beträge einer Gruppe gebildet.

Die hier gewählte Betragsgruppenbildung ermöglicht eine Reduktion von anfangs 128 Beträge (es wird auch nur eine Hälfte der 256 konjugiert komplexen Werte benutzt) auf 58 Frequenzbänder. Dabei werden für den tiefsten Frequenzbereich (Betragsgruppe 0 bis 31) je ein Betragswert, d.h. 32 Frequenzbänder, für den anschließenden Frequenzbereich (Beträge 32 bis 60) je zwei Betragswerte, d.h. 14 Frequenzbänder, für den nächstanschließenden Frequenzbereich (Beträge 60 bis 104) je vier Betragswerte, d.h. 11 Frequenzbänder und für den höchsten Frequenzbereich (Beträge 104 bis 112) je acht Betragswerte, d.h. 1 Frequenzband zusammengefaßt (die Beträge 112 bis 127 wurden nicht mehr berücksichtigt).

Zur weiteren Datenreduktion der Frequenzbänder werden nun zunächst, als Vorstufe zur Quantisierung, Quantisierungsstufen je Frequenzband festgelegt.

Dabei wird erfindungsgemäß ausgenutzt, daß das menschliche Gehör unterhalb einer gewissen Schwelle, die frequenzabhängig ist, d.h. unterhalb der sogenannten absoluten Hörschwelle, nichts mehr wahrnehmen kann, obwohl meßbare Signale vorliegen. Deshalb wird dieser unterhalb der Hörschwelle liegende Bereich für die Quantisierungsstufen nicht berücksichtigt, so daß die Quantisierungsstufen zur besseren Abbildung des hörbaren Bereichs optimiert werden können (vgl. (6)).

Außerdem wird eine relative Hörschwelle berücksichtigt, die auf dem sogenannten Maskierungseffekt beruht. Aufgrund dieses Effektes werden leise Töne, die unmittelbar in der Umgebung eines lauten Tones liegen (große Betragswerte) verdeckt, d.h. ausmaskiert. Diese ausmaskierten Frequenzen werden deshalb ebenfalls nicht oder nur abgeschwächt berücksichtigt (vgl. (7)).

Da die relative Hörschwelle frequenzabhängig ist, wird gemäß einer weiteren Ausgestaltung der Erfindung eine Gewichtung eingeführt, um die jeweils betragsmäßig größere Schwelle stärker zu berücksichtigen.

Mit Hilfe der so gewählten Quantisierungsstufen erfolgt dann eine variable Quantisierung der Frequenzbänder (vgl. (8, 9)).

Dazu werden zuerst die Frequenzbänder in eine vorgebbare Anzahl, hier ca. 15 Untergruppen, bestehend aus Einzelwerten der Frequenzbänder, aufgeteilt und der jeweils größte Einzelwert je Untergruppe bestimmt. Der größte Betragswert wird dann mit der maximal zur Verfügung stehenden Bitzahl quantisiert, während alle anderen Betragswerte mit einer kleineren Bitzahl quantisiert werden. Für den unteren Frequenzbereich werden z.B. der größte Betragswert mit 7 Bit und die anderen Werte mit 5 Bit quantisiert und für hohe Frequenzbereiche erfolgt eine Quantisierung von 5 Bit zu 3 Bit.

Die so codierten Betragswerte und Phasenwerte werden dann mit 32 kbit/s übertragen. Auf der Gegenseite kann dann in analoger Arbeitsweise eine Decodierung stattfinden.

Gemäß einer weiteren erfindungsgemäßen Lösung (Anspruch 5) wird nach dem Schritt (3), wie in Figur 2 zu sehen, zunächst die relative Hörschwelle berücksichtigt. Dabei werden solche Betragswerte von Koeffizienten, die in der Umgebung von Frequenzlinien mit großen Betragswerten liegen ganz oder garnicht berücksichtigt (Schritt 10).

Im Schritt 11, vgl. Figur 2, werden die Betragswerte, analog wie in Schritt (5), nun wieder in Frequenzbändern (ca. 60 Gruppen) eingeteilt, wobei entsprechend mit zunehmender Frequenz eine größere Anzahl von Werten in einer Gruppe eingeteilt werden.

Im Schritt (12) erfolgt dann analog zum Schritt (6) die Berücksichtigung der absoluten Hörschwelle. Dabei werden die Quantisierungsstufen je Frequenzband derart festgelegt, daß die Betragswerte eines Bandes durch einen Frequenzabhängigen, die absolute Hörschwelle angebenden Faktor dividiert werden.

Im folgenden Schritt (13) erfolgt dann eine variable Quantisierung der Betrags- und Phasenwerte mit einer von tiefen zu hohen Frequenzen hin gröber werdenden Quantisierungskennlinie. Dabei wird nun erfindungsgemäß berücksichtigt, daß in bestimmten Fällen die Betragswerte nicht berücksichtigt werden müssen, d.h. den Wert Null zugeordnet bekommen.

Dies ist der Fall, wenn Betragswerte unterhalb der relativen Hörschwelle oder unterhalb der absoluten Hörschwelle liegen. Dann ist es ausreichend den Betragswert Null zu übertragen und die zugehörigen Phasenwerte nicht zu berücksichtigen, d.h. keine Bits für die Quantisierung dieser Phasenwerte zu verwenden.

Die so "eingesparten" Bits werden erfindungsgemäß für die von Null verschiedenen zu quantisierenden Betrags- und Phasenwerte verwendet.

Gemäß einer weiteren Ausgestaltung der Erfindung kann noch im Schritt (11) eine sogenannte spektrale Rauhheit für die in Frequenzbänder eingeteilten Betragswerte ermittelt werden. Dadurch wird berücksichtigt, daß unter Umständen Instrumente z.B. Geigen oder auch Stimmen eine Vielzahl von höheren Harmonischen aufweisen, die in bestimmten höheren Frequenzen enthalten sind. Würde man nun, wie in Schritt (5) beschrieben, den geometrischen Mittelwert aller Betragswerte eines Bandes verwenden, würden nicht akzeptable Verzerrungen auftreten.
Deshalb wird innerhalb eines Bandes der Quotient aus jedem Betragswert und dem geometrischen Mittelwert des Bandes als Maßstab für die spektrale Rauhheit gebildet. Falls der maximale Betragswert eines Bandes den
geometrischen Mittelwert um einen vorgebbaren Faktor, vorzugsweise um den Faktor 2 übersteigt, wird nur der maximale Betragswert berücksichtigt und die anderen Betragswerte des Bandes gleich Null gesetzt.
Im anderen Fall wird, wie in Schritt (5), der geometrische Mittelwert verwendet.

Falls der maximale Betragswert verwendet wird, werden wiederum für die zu Null gesetzten Betragswerte nur ein Wert Null übertragen und die zugehörigen Phasenwerte nicht quantisiert. Die so ebenfalls "eingesparten" Bits können für die von Null verschiedenen Betrags- und Phasenwerte in vorteilhafter Weise verwendet werden.

Da das menschliche Ohr tiefere Frequenzen besser wahrnimmt als höhere Frequenzen, wird für die Quantisierung der Betrags- und Phasenwerte mit 4 Bits bzw. 3 Bits für die tieferen Frequenzen begonnen und für die höheren Frequenzen nur noch 3 Bits bzw. 2 Bits verwendet.

Die zuvor beschriebenen erfindungsgemäßen Codierverfahren erlauben eine Echtzeit-Implementierung eines Codierers/Decodierers mittels eines einzigen digitalen Signalprozessors für 32 kbit/s.

## Patentansprüche

1. Verfahren zur Codierung digitalisierter Audiosignale, bestehend aus folgenden Schritten:
- Aufteilen des aus einer kontinuierlichen Folge von Abtastwerten bestehenden Audiosignales in aufeinanderfolgende Blöcke gleicher Länge und Durchführung einer überlappenden Fensterung,
- Transformieren der Blöcke mittels einer diskreten Fourier-Transformation in komplexe Fourier-Koeffizienten,
- Zerlegen der Koeffizienten in Betragswerte und Phasenwerte,
- Quantisieren der Phasenwerte mit einer linearen, von tiefen zu hohen Frequenzen hin gröber werdenden Quantisierungskennlinie,
- Zusammenfassen der Betragswerte zu Frequenzbändern, die orientiert an kritschen Frequenzgruppen zu hohen Frequenzen hin breiter werden,
- Festlegen von Quantisierungsstufen je Frequenzband unter Berücksichtigung einer unteren frequenzabhängigen, absoluten Hörschwelle, in der Art, daß ein unter der jeweiligen Hörschwelle liegender Bereich nicht berücksichtigt wird, und unter Berücksichtigung einer relativen Hörschwelle, in der Art, daß Bereiche (ausmaskierte Frequenzen) in der Umgebung von Frequenzen mit großen Betragswerten nicht oder nur abgeschwächt berücksichtigt werden,
- Festlegen einer vergebbaren Anzahl von Untergruppen, bestehend aus Einzelwerten der Frequenzbänder und Bestimmung des jeweils größten Einzelwertes je Untergruppe und
- variables Quantisieren jedes Frequenzbandes, in dem der größte Betragswert einer Untergruppe mit der maximal zur Verfügung stehenden Anzahl von Bits und alle anderen Betragswerte mit einer kleineren Anzahl von Bits quantisiert werden.

2. Verfahren nach Anspruch 1, mit folgenden Schritten
- Aufteilen der kontinuierlichen Folge von Abtastwerten in Blöcke von 256 Werten und
- Verwenden einer Rechteck-Cosinus-Funktion für die überlappende Fensterung.

3. Verfahren nach Anspruch 1 oder 2, mit folgendem Schritt
- Quantisieren der Phasenwerte, beginnend mit 5 Bit für die tiefste Frequenz und linear abnehmend bis zu 2 Bit für die höchste Frequenz.

4. Verfahren nach Anspruch 1, mit folgendem Schritt
- Gewichten der unteren Hörschwelle und der relativen Hörschwelle zur Festlegung der Quantisierungsstufen in der Art, daß die betragsmäßig größere Schwelle stärker berücksichtigt wird.

5. Verfahren zur Codierung digitalisierter Audiosignale, bestehend aus folgenden Schritten:
- Aufteilen des aus einer kontinuierlichen Folge von Abtastwerten bestehenden Audiosignales in aufeinanderfolgende Blöcke gleicher Länge und Durchführung einer überlappenden Fensterung,
- Transformieren der Blöcke mittels einer diskreten Fourier - Transformation in komplexe Fourier-Koeffizienten,
- Zerlegen der Koeffizienten in Betragswerte und Phasenwerte,
- Berücksichtigen einer relativen Hörschwelle, in der Art, daß die Betragswerte von Koeffizienten (ausmaskierte Frequenzen), die in der Umgebung von Frequenzlinien mit großen Betragswerten liegen, ganz oder garnicht berücksichtigt werden,
- Einteilen der Betragswerte zu Frequenzbändern, die orientiert an kritischen Frequenzgruppen zu hohen Frequenzen hin breiter werden,
- Festlegen von Quantisierungsstufen je Frequenzband unter Berücksichtigung einer unteren frequenzabhängigen, absoluten Hörschwelle, in der Art, daß ein unter der jeweiligen Hörschwelle liegender Bereich nicht berücksichtigt wird und
- Variables Quantisieren der Betrags- und Phasenwerte mit einer von tiefen zu hohen Frequenzen hin gröber werdenden Quantisierungskennlinie, wobei für solche Betragswerte von Koeffizienten die unterhalb der relativen Hörschwelle oder unterhalb der absoluten Hörschwelle liegen, für die Betragswerte der Wert Null und für die zugehörigen Phasenwerte kein Wert quantisiert wird, und wobei die nicht für diese Phasenwerte benötigten Bits zur genaueren Quantisierung der von Null verschiedenen Betrags- und Phasenwerten verwendet werden.

6. Verfahren nach Anspruch 5, bestehend aus folgenden Schritten:
- Ermitteln einer spektralen Rauhheit für die in Frequenzbändern eingeteilten Betragswerten, in dem der Quotient aus jedem Betragswert und dem geometrischen Mittelwert seines Frequenzbandes gebildet wird und
- für den Fall, daß der maximale Betragswert den geometrischen Mittelwert um einen vorgebbaren Faktor übersteigt, nur dieser Wert und seine Position innerhalb des Frequenzbandes weiter berücksichtigt wird, oder für den Fall, daß der maximale Betragswert den geometrischen Mittelwert nicht um den vorgebbaren Faktor übersteigt, ein den geometrischen Mittelwert aller Betragswerte darstellender Wert weiter berücksichtigt wird.

7. Verfahren nach Anspruch 6, bestehend aus folgenden Schritten:
- für den Fall, daß nur der maximale Betragswert eines Frequenzbandes berücksichtigt wird, berücksichtigen des Wertes Null für alle anderen Betragswerte des Frequenzbandes und
- Verwenden der für die zugehörigen Phasenwerte nicht benötigten Bits für die von Null verschiedenen Betrags- und Phasenwerte.

8. Verfahren nach Anspruch 6, bestehend aus folgendem Schritt:
- Verwenden eines Wertes 2 als vorgebbarer Faktor.
